# EUROPEAN PATENT APPLICATION

(11) **EP 4 375 806 A1**
(43) Date of publication of application: **29.05.2024**
(21) Application number: 22209772.7
(22) Date of filing: 28.11.2022
(51) Int. Cl.: G06F 3/01, G06F 3/04812, G06F 3/14, G05B 19/042

(54) **GAZE DETECTION IN A PROCESS CONTROL SYSTEM**

(71) Applicant: ABB SCHWEIZ AG, 5400 Baden (CH)
(72) Inventor: BJORNDAL, Petra, 645 52 Strängnäs (SE); ZIOBRO, Dawid, 724 62 Västerås (SE); MACAUDA, Andrea, 16165 Genova (IT); SKONNEGARD, Pierre, 647 35 Mariefred (SE); GOPALAKRISHNAN, Gayathri, 632 25 Eskilstuna (SE); SCHUETZ, Gregor, 8404 Winterthur (CH); UDDMAN, Marcus, 865 32 Alnö (SE); ROMANIUK, Jaroslaw, 95-060 Jordanow (PL); AZHAR, Saad, 724 77 Västerås (SE); LE, Duy Khanh, Tay Ninh Province (VN)
(74) Representative: Kransell & Wennborg KB

(57) **Abstract**

A process control system comprises a first piece of process control equipment, a first screen environment for a first user (52) comprising at least one first screen (37a) and a first gaze tracking system (54), where the first screen displays (37a) a first object (56) representing the first piece of process control equipment, a second screen environment for a second user comprising at least one second screen, where the second screen displays a second object also representing the first piece of process control equipment, and a collaboration control device. The collaboration control device detects, using the first gaze tracking system (54), the first user (52) gazing at the first object (56) and emphasizes the second object in order to indicate to the second user that the first user is focusing on the first piece of process control equipment.

## Description

### TECHNICAL FIELD

The invention relates to a method, a collaboration control device, a computer program and computer program code for supporting collaboration between a first user in a first screen environment and a second user in a second screen environment as well as to a process control system comprising such a collaboration control device and screen environments.

### BACKGROUND

An industrial process that is being controlled in a process control system can be monitored by users via corresponding user terminals, such as workstations, where such a user terminal may provide a screen environment of the user. At times two or more such users may also need to collaborate.

Collaboration in industrial settings is becoming common in remote settings, with participants (e.g. operators, engineers) sitting at different sites remotely talking and sharing screen to perform various tasks. However, communication between them in such remote settings can often be confusing due to asymmetric workspace setup across the sides (e.g. multiple screens vs single screens, large displays vs small displays, laptops/desktops vs mobile devices) leading to information displayed differently.

Furthermore, during such collaboration, it may be of interest for a user of the process control system to be able to know what another user is gazing at.

US 9678567 discloses a method and system for real-time communication between physically remote parties in a communication session between two users. Individual content that is displayed on two displays is here associated with this communication session. In order to enhance the communication relating to the visual content, eye tracking information relating to a first user is received, translated into a corresponding location on the display of a second user, and indicated to the second user.

However, in process control systems the users are typically observing objects in their respective screen environments that represent pieces of process control equipment. Objects representing the same piece of process control equipment may be displayed in different locations of a screen or in different screens in the two screen environments. Thereby it is in many cases not of interest at which area of a screen that a user gazes, but rather at which object that the user gazes and the piece of process control equipment that it represents.

There is thus a need for an improvement in the use of gaze tracking, especially with regard to process control systems.

### SUMMARY

One object of the invention is therefore to improve the use of gaze tracking in a process control system.

This object is according to a first aspect achieved by a method of supporting collaboration between a first user in a first screen environment comprising at least one first screen and a second user in a second screen environment comprising at least one second screen, where the first screen displays a first object representing a first piece of process control equipment of a process control system and the second screen displays a second object also representing the first piece of process control equipment, the method comprising:
detecting, using a first gaze tracking system in the first screen environment, the first user gazing at the first object, and emphasizing the second object in order to indicate to the second user that the first user is focusing on the first piece of process control equipment.

The method may be performed by a collaboration control device. More particularly it may be performed by a collaboration control function implemented in the collaboration control device.

The object is according to a second aspect achieved through a collaboration control device for supporting collaboration between a first user in a first screen environment comprising at least one first screen and a second user in a second screen environment comprising at least one second screen, where the first screen displays a first object representing a first piece of process control equipment of a process control system and the second screen displays a second object also representing the first piece of process control equipment, the collaboration control device comprising a processor configured to:
detect, using a first gaze tracking system in the first screen environment, the first user gazing at the first object, and
emphasize the second object in order to indicate to the second user that the first user is focusing on the first piece of process control equipment.

The object is according to a third aspect achieved through a computer program for supporting collaboration between a first user in a first screen environment and a second user in a second screen environment, said computer program comprising computer code which when executed by a processor of a collaboration control device according to the second aspect causes the collaboration control device to perform the steps of the method according to the first aspect.

The object is according to a fourth aspect further achieved through a computer program product for supporting collaboration between a first user in a first screen environment and a second user in a second screen environment, the computer program product comprising a data carrier with the computer program with computer program code according to the third aspect.

The object is according to a fifth aspect further achieved through a process control system comprising:
a first piece of process control equipment,
a first screen environment for a first user comprising at least one first screen and a first gaze tracking system, where the first screen displays a first object representing the first piece of process control equipment,
a second screen environment for a second user comprising at least one second screen, where the second screen displays a second object also representing the first piece of process control equipment, and
a collaboration control device comprising a processor configured to:
   detect, using the first gaze tracking system, the first user gazing at the first object, and
   emphasize the second object in order to indicate to the second user that the first user is focusing on the first piece of process control equipment.

Aspects of the present disclosure thus proposes improved communication between users in industrial settings. Gaze tracking is used to locate where a first user looks in a first screen environment. Then a determination is made of what object he or she is interested in and at and to which piece of process control equipment this object corresponds. Then an object displaying the piece of process control equipment in a second screen environment is emphasized.

The detecting of the first user gazing at the first object may be based on the first gaze tracking system detecting the first user gazing at an area in the first screen and identifying the first object as an object being displayed in this area. The identifying of the first object may additionally be based on the first user interacting with the first object, such as selecting the first object or performing settings of the first object. The identifying of the first object may also be based on the first piece of process control equipment having a special state in the process control system, such as being faulty or operating beyond set operational boundaries or generating an alarm.

It is possible that there is a third and a fourth object in the first and the second screen environments, respectively, which third and fourth objects represent a second piece of process control equipment located upstream or downstream from the first piece of process control equipment in a process control flow of the process control system.

In this case it is possible that the method further comprises emphasizing the fourth object in the second screen environment in order to indicate to the second user an area of the process control flow that the first user is studying.

In this case it is also possible that the collaboration control device is further configured to emphasize the fourth object in the second screen environment in order to indicate to the second user an area of the process control flow that the first user is studying.

It is also possible that the second piece of process control equipment is located upstream of the first piece of process control equipment and that there is a fifth and sixth object displayed in the first and second screen environments, respectively, where the fifth and sixth objects represent a third piece of process control equipment located downstream of the first piece of process control equipment.

In this case it is possible that the method further comprises emphasizing the sixth object in the second screen environment in order to indicate to the second user the area of the process control flow that the first user is studying.

In this case it is also possible that the collaboration control device is further configured to emphasize the sixth object in the second screen environment in order to indicate to the second user the area of the process control flow that the first user is studying.

The emphasizing may involve highlighting, blinking and/or changing the size or shape of an object.

In a variation of the first aspect, the method may comprise detecting, using a second gaze tracking system in the second screen environment, the second user gazing at an object in the second screen environment and directing, if the object that the second user is gazing at is different from the second object, one of the users towards an object in the screen environment of this user, where the object that said one user is being directed towards corresponds to the object that said other user is gazing at.

In a corresponding variation of the second aspect, the collaboration control device may be further configured to detect, using a second gaze tracking system in the second screen environment, the second user gazing at an object in the second screen environment and directing, if the object at which the second user is gazing is different from the second object, one of the users towards an object in the screen environment of this user, where the object that said one user is being directed towards corresponds to the object at which said other user is gazing.

The directing of one of the users towards an object corresponding to the object at which the other is gazing may be made in case the second object and the object at which the second user is gazing together fulfil a separation criterion.

The separation criterion may comprise a distance threshold that a distance between the second object and the object at which the second user gazes should exceed. Additionally or instead, the separation criterion may specify that the object at which the second user gazes is in a different screen than the second screen.

The directing of one of the users towards an object corresponding to the object at which the other gazes may comprise directing the second user towards the second object.

The second user may be gazing at a seventh object in the second screen environment. In this case the directing of one of the users towards an object corresponding to the object at which the other gazes may comprise directing the first user towards an eighth object in the first screen environment corresponding to the seventh object in the second screen environment.

The seventh and the eighth objects may correspond to the same entity in the process control system, such as the same piece of process control equipment.

The objects in the screens may be graphical object.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a process control system including a collaboration control device and a first and a second user terminal,
fig. 2 shows a block schematic of a user terminal,
fig. 3 shows a block schematic of the collaboration control device,
fig. 4 shows a computer program product in the form of a CD ROM disc with computer program code used to implement a collaboration control function of the collaboration control device,
fig. 5 shows a first user gazing at a first object on a first screen of a first screen environment provided at the first user terminal,
fig. 6 shows a second user gazing at one screen in a second screen environment comprising a second, third and fourth screen, and
fig. 7 shows a flow chart of a number of method steps in a method of supporting collaboration between the first user in the first screen environment and the second user in the second screen environment.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards a process control system and more particularly towards the collaboration between users of the process control system based on gaze tracking.

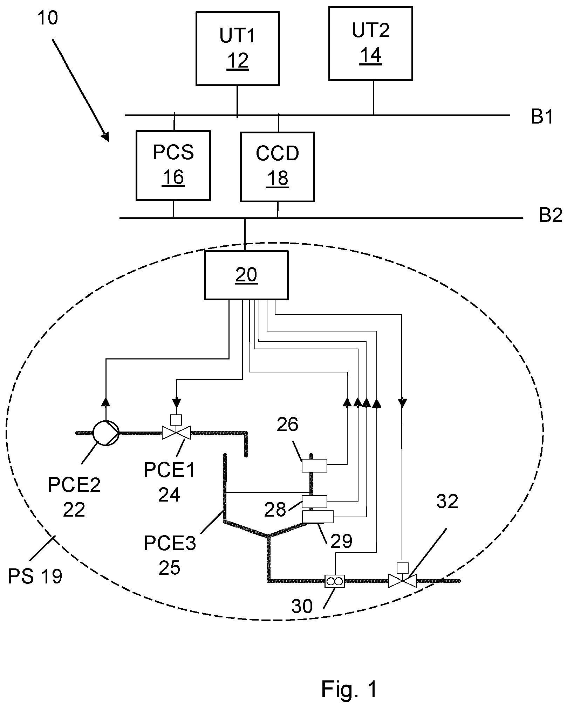

Fig. 1 schematically shows a process control system 10 for controlling an industrial process or perhaps part of an industrial process. Typical processes are electrical power generation, transmission, distribution and supply processes, water purification and distribution processes, oil and gas production and distribution processes, petrochemical, chemical, pharmaceutical and food processes, and pulp and paper production processes. These are just some examples of processes where the system can be applied. There exist countless other processes.

Normally there may in such a system be one or more controllers having some local software for controlling one or more pieces of process control equipment. The process control equipment may comprise equipment that influence or measure different properties of the technical process. A piece of process control equipment may for instance be a pump, a motor, a valve, etc. A process, or a part of a process, may be controlled via a server, which then typically communicates with a controller for providing local control. The process may be monitored through an operator terminal or workstation, which communicates with the server. Such a workstation or operator terminal is also a form of user terminal.

In fig. 1 the system 10 therefore includes a number of user terminals UT1 12 and UT2 14 connected to a first bus B1. There is in this case a first user terminal UT112 and a second user terminal UT2 14. There is furthermore a second bus B2 and between the first and second busses B1 and B2 there is connected a process control server PCS 16 with a control function for controlling the process. There is also a collaboration control device CCD 18 connected between the first and the second buses B1 and B2. To the second bus B2 there is furthermore connected a controller 20 (Process Controller or Programmable Logic Controller (PLC)) for providing local control in the system 10.

In the figure there is only provided one controller 20. It should however be realized that there may be several more controllers in the system 10. The controller 20 is connected to one or more pieces of process control equipment. As an example, the controller 20 is shown as being connected to process control equipment in a process section PS 19 for controlling a process control flow through a part of the industrial process, which process section 19 includes a first inlet pipe leading to a tank 25 and a second outlet pipe leaving the tank 25. In the first pipe there is provided a pump 22 that pumps fluid into the first pipe as well as a first valve 24. In the tank 25 there are provided two level sensors 26 and 28 and in the outlet pipe there is provided a flow meter 30 and a second valve 32. There is also a temperature sensor 29 in the tank 25. The pipes, tank, valves and sensors are examples of process control equipment. Here the first valve 24 is a first piece of process control equipment PCE1, the pump 22 is a second piece of process control equipment PCE2 and the tank 25 is a third piece of process control equipment PCE3. The second piece of process control equipment 22 is located upstream or downstream from the first piece of process control equipment 24. In the present example the second piece of process control equipment 22 is located upstream of the first piece of process control equipment 24 and the third piece of process control equipment 25 is located downstream of the first piece of process control equipment 24.

The level sensors 26 and 28 measure the physical quantity liquid volume, the temperature sensor measures the physical quantity liquid temperature and the flow meter 30 measures the physical quantity volumetric flow rate of the liquid. The controller 20 may receive control input values from the pump 22, level sensors 26 and 28 and temperature sensor 29 and regulate the liquid level in the tank 25 based on these control input values through controlling the first valve 24. It also receives control input values from the flow meter 30 and temperature sensor 29 and controls the second valve 32 for regulating the output fluid flow.

The above-described control is merely an example of one type of control in a process control example. It should be realized that several different other types of control are possible and that several other types of physical quantities can be measured. It is for instance possible to also measure pressure. The above-described process control equipment are therefore also merely examples of process control equipment that can be used. Also the controller and the process control server may be considered to be pieces of process control equipment as may the pipes and the sensors.

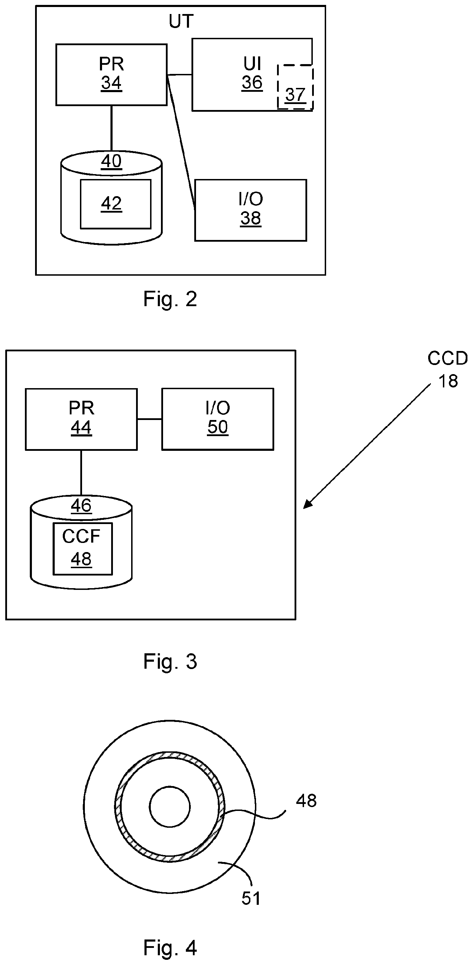

Fig. 2 schematically shows one realization of a user terminal UT. There is a processor PR 34 and a data storage 40 with computer program instructions 42 that, when executed by the processor 34, implements a user terminal control function. There is also an input/output (I/O) interface 38 for communication with the other entities in the process control system and especially for communicating with the collaboration control device 18 and the control server 16. Finally, there is a user interface UI 36 which comprises one or more screens 37 for displaying information about the process and the process control system to a user, such as an operator. A screen 37 may be a touch screen allowing the user to input data and commands as well as to move a pointer or to select objects in different screens. It should be realized that the user interface 36 may also or instead comprise other means of allowing user input, such as a mouse or trackball, a keyboard or a keypad.

Fig. 3 schematically shows one realization of the collaboration control device 18. There is a processor 44 and a data storage DS 46 with computer program instructions or computer program code 48 that, when executed by the processor 44, implements a collaboration control function CCF. There is also an input/output (I/O) interface 50 for communication with the user terminals and with the process control server 16.

The collaboration control device may thus be provided in the form of a processor 44 with associated program memory 46 including computer program code 48 for implementing the collaboration control function.

A computer program may also be provided via a computer program product, for instance in the form of a computer readable storage medium or data carrier, like a CD ROM disc or a memory stick, carrying such a computer program with the computer program code, which will implement the collaboration control function when being loaded into a processor. One such computer program product in the form of a CD ROM disc 51 with the above-mentioned computer program code 48 is schematically shown in fig. 4.

The user terminals are industrial Human Machine Interfaces (HMIs) and may each have one or more screens together providing a screen environment for the user of the user terminal. Each screen may be able to display several views of the process control system or of parts of the process control system.

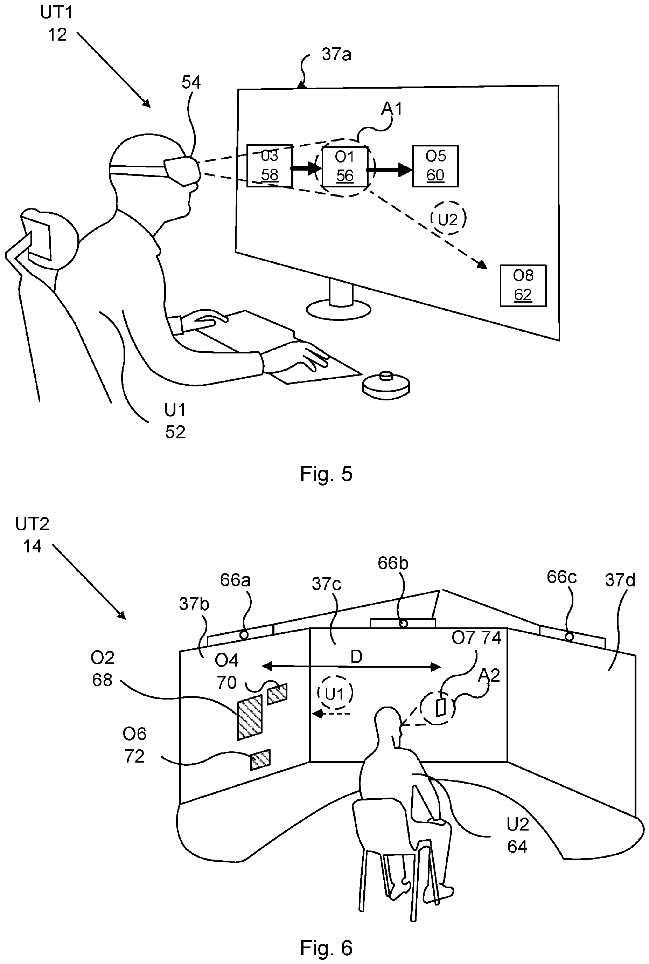

Fig. 5 schematically shows the first user terminal UT1 12 and a first user U1 52 who is wearing a first gaze tracking system 54. The first gaze tracking system 54 is thus a wearable gadget, such as goggles, worn by the first user 52. There is a first screen environment for the first user 52 and this first screen environment comprises at least one first screen 37a of the first user terminal 12. In this example the first screen environment comprises a single first screen 37a. There is thus only one first screen 37a and on this first screen 37a there is shown a first, third and fifth object O1 56, O3 58 and O5 60, which objects are graphical objects that correspond to the first, second and third pieces of process control equipment 24, 22, 25. The first object 56 thus corresponds to the first piece of process control equipment 24, the third object 58 corresponds to the second piece of process control equipment 22 located upstream of the first piece of process control equipment 24 and the fifth object 60 corresponds to the third piece of process control equipment 25 located downstream of the first piece of process control equipment 24. The process control flow is also shown through arrows used to interconnect the third, first and fifth objects 58, 56, 60. There is also an eighth graphical object O8 62, which is associated with some other part of the process control system 10. The first gaze tracking system 54 detects an area A1 of the first screen at which the first user 52 gazes and provides this information to the collaboration control function. It is possible that the collaboration control function has knowledge about what objects are being displayed on the first screen 37a as well as where on this screen 37a they are displayed. Based on information about the area A1, the collaboration control function thus knows what object the first user is looking at as well as what piece of process control equipment to which this object corresponds. In the present example the first user 52 gazes at the first object 56.

Fig. 6 schematically shows the second user terminal UT2 14 and a second user U2 64 of this second user terminal 14. As can be seen there is a second screen environment for the second user 64 comprising at least one second screen 37b. In the present example the second screen environment comprises three screens; the second screen 37b, a third screen 37c and a fourth screen 37d. There is also a second gaze tracking system comprising a first gaze tracking device 66a provided on the second screen 37b, a second gaze tracking device 66b provided on the third screen 37c and a third gaze tracking device 66c provided on the fourth screen 37d, where each gaze tracking device 66a, 66b, 66c is set to track the gaze of the second user 64 if gazing on the corresponding screen 37b, 37c, 37d. The second gaze tracking system thus comprises gaze-tracking devices 66a, 66b, 66c, which may portable devices attached to the workstation of the second user 64.

In the second screen 37b there is shown a second, fourth and sixth object O2 68, O4 70, O6 72, which likewise are graphical objects that correspond to the first, second and third pieces of process control equipment 24, 22, 25. The second object 68 corresponds to the first piece of process control equipment 24, the fourth object 70 corresponds to the second piece of process control equipment 22 located upstream of the first piece of process control equipment 24 and the sixth object 72 corresponds to the third piece of process control equipment 25 located downstream of the first piece of process control equipment 24. It can here be noted that in this case the objects are not displayed in the order in which they appear in the process control flow. There is also a seventh graphical object O7 74, which is associated with the same part of the process control system as the eighth object 62. The seventh object 74 is displayed in the third screen 37c. If the second user 64 gazes at the second screen 37b, the first gaze tracking device 66a detects the area of this screen at which the second user 64 gazes and provides this information to the collaboration control device. If the second user 64 gazes at the third screen 37c, the second gaze tracking device 66b detects the area A2 of this screen at which the second user 65 gazes and provides this information to the collaboration control device and if the second user 64 gazes at the fourth screen 37d, the third gaze tracking device 66c detects the area of this screen at which the second user 65 gazes and provides this information to the collaboration control function. In the present example the second user gazes at an area A2 of in the third screen 37c in which the seventh object 74 is displayed.

Also here the collaboration control function has knowledge about what objects are being displayed on the different screens 37b, 37c, 37d as well as where on these screens 37b, 37c, 37d they are displayed as well as what elements in the process control system, such a pieces of process control equipment they correspond to..

The collaboration control device with the collaboration control function is provided for improving collaboration in a process control system.

Distributed work in industry is becoming more and more common. It is still a challenge to collaborate over a distance with today's technical solutions such as voice, video and shared screens. This is especially true for co-production type of collaboration tasks where several individuals are working towards the same goal during intense sessions of collaboration in real time. To do this over distance in an efficient way, it puts high requirements on the tool support. Non-verbal cues have great importance for successful collaboration between individuals during these types of sessions but are still not well supported in today's industry adapted collaboration solutions. Gaze is an important example of a non-verbal cue used all the time during co-production. The lack of gaze supported collaboration can lead to more misunderstandings and increase the dependency of explicit wordings and verbal communication. This can be hard especially in noisy industrial environments. Also, collaborators that do not share exactly the same vocabulary due to different competences/roles or the use of a second language are other complicating factors causing problems in the communication. This leads to a need for better support for gaze-based communication solutions adapted to industrial environments.

To reduce inefficient communication in remote collaboration in industrial settings, aspects of the present disclosure proposes to enhance human-machine interfaces (HMIs) in industrial settings (e.g., HMIs for process control) with gaze information of remote collaborators if there is any collaboration going on. The system will detect where or which object on the HMI at which the local user is looking and accordingly visualize it on the HMIs of a remote side of collaboration. This will allow collaborators to be quickly aware of what their remote counterparts are paying attention to without relying on verbal expressions. This will make communication more efficient and inherently improve the collaboration productivity.

The first and second user 52, 64 may be involved in the performing of a task in the process control system 10. In this respect it may be of essence that it is absolutely clear to the second user 64 which object in the first screen environment the first user 52 is focusing on in order to avoid any confusions. Aspects of the present disclosure are directed towards addressing this issue.

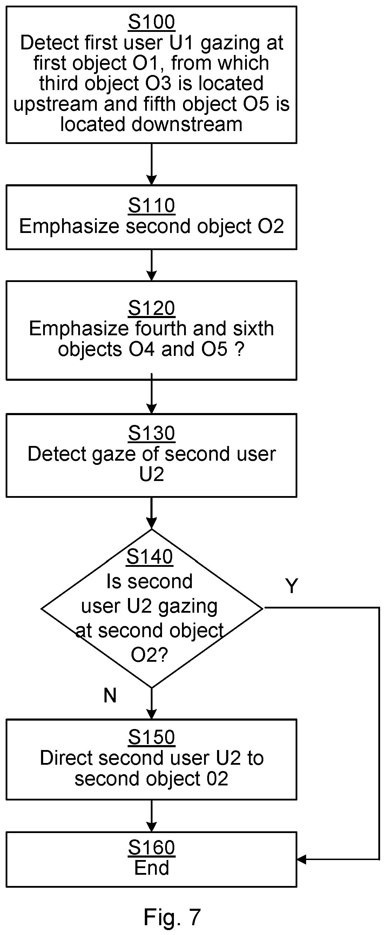

How this may be done will now be described with reference being made also to fig. 7, which shows a flow chart of a number of method steps in a method of supporting collaboration between the first user in the first screen environment and the second user in the second screen environment.

It is possible that the users have entered into a collaboration mode in which at least some of the activities of the first user are displayed to the second user and at least some of the activities of the second user are displayed to the first user. This collaboration mode could be operated under the control of the collaboration control function.

Furthermore, in this collaboration mode, the first object 56 is displayed on the first screen 37a in the first screen environment and the second object 68 is displayed on the second screen 37b in the second screen environment. The third and fifth objects 58, 60 are displayed in the first screen environment and the fourth and sixth objects 70, 72 are displayed in the second screen environment. In this example the third and fifth objects 58, 60 are displayed on the first screen 37a in the first screen environment and the fourth and sixth objects 70, 72 are displayed on the second screen 37b in the second screen environment. The first, third and fifth objects 56, 58, 60 represent the first, second and third pieces of process control equipment 24, 22, 25 in the process control flow of the previous described process section 19 of the process control system 10 and the second, fourth and sixth objects 68, 70, 72 also represent the first, second and third pieces of process control equipment 24, 22, 25. Additionally, the eighth object 62 is displayed on the first screen 37a in the first screen environment and the seventh object 74 is displayed on the third screen 37c in the second screen environment.

In relation to such a collaboration mode, the first gaze tracking system 54 may detect at which area A1 of the first screen 37a the first user 52 is gazing. This information may be forwarded from the first gaze tracking system to the collaboration control function of the collaboration control device 18. The collaboration control function may have knowledge of where on the first screen 37a, the different objects 56, 58, 60 are displayed. The collaboration control function may also identify a piece of process control equipment that the object gazed at corresponds to. This maybe done through investigating a mapping that exists between the objects and process control equipment.

The gaze tracking system 54 thus provides the information of where on the HMI the first user is looking at (and thus paying attention to). The location information where the user is looking at is then utilized by the collaboration control function to identify the corresponding object of interest on the HMI.

As an eye gaze of a person often moves really fast, conveying information of every gaze movement can be frustrating to the receiver. Thus, the collaboration control function can apply certain threshold or adaptive learning approach to determine which gaze is intentionally focusing on a certain object and which one is not. For example, if it is detected that the gaze of the first user has been staying around a certain object or area for a certain time, this can be considered as an intentionally focused gaze. Then the object of focus will be determined.

It is also possible to analyze a current state and activities being performed by the first user 52 in the process control system 10 to identify the object that the first uses 52 gazes at, such as if the first user 52 has interacted with an object in the area A1 via the first user terminal 12 or if the piece of process control system corresponding to an object in the area A1 having a certain state in the process control system like being faulty, operating outside of set operation boundaries or generating an alarm.

In the present case the first user 52 is gazing at the first object 56 and therefore there is a detecting of the first user 52 gazing at the first object 56 using the first gaze tracking system 54, S100, where, as was mentioned earlier, the detecting of the first user 52 gazing at the first object 56 is based on the first gaze tracking system 54 detecting the first user 52 gazing at an area A1 in the first screen 37a and identifying the first object 56 as an object being displayed in this area A1 and where the identifying of the first object can also be based on the first user 52 interacting with the first object 56 and/or based on the first piece of process control equipment 24 having a special state in the process control system 10.

Moreover, as the first object 56 corresponds to the first piece of process control equipment 24, there is also a third object 58 corresponding to the second piece of process control equipment 22 located upstream of the first piece of process control equipment 24 and a fifth object 60 corresponding to the third piece of process control equipment 25 located downstream of the first piece of process control equipment 24.

The collaboration control function also has knowledge of which objects are displayed on the screen in the second screen environment, where on those screens they are displayed and to what elements of the process control system these objects correspond, for instance to what pieces of process control system they may correspond.

The collaboration control function identifies the object that corresponds to the first piece of process control equipment 24 in the second screen environment, such as in the same or a similar type of view as the first user gazes at in the first screen environment. The collaboration control function may thereby identify the second object 68 in the second screen 37b of the second screen environment.

Based on this identification there is then an emphasis of the second object 68 corresponding to the first piece of process control equipment 24 in the second screen environment, S110, which emphasizing is in this case performed in the second screen 37b and done in order to indicate to the second user 64 that the first user 52 is focusing on the first piece of process control equipment 24. This may be done through the collaboration control function instructing the second user terminal 14 to emphasize the second object 68 on the second screen 37b. Thereby, the second user 64 is informed on which object the first user 52 is focusing and this may assist the second user 64 in the solving of a task.

The collaboration control function may thus identify the correspondence of the object of interest of the first user 52 and may as an example highlight it on the HMI of the second user 64. This may help the second user 64 in being able to determine the part of the process control system 10 on which the first user 52 is focusing. Thereby the second user 64 will be quickly aware of what and where the focus of the first user 52 is. This leveraging of gaze information to detect and highlight HMI objects of interest allows collaborators to efficiently share non-verbal communication regardless of whether the HMI layouts and arrangements are the same in the two screen environments, which allows scalability in the reality.

Optionally also the fourth and/or the sixth objects 70, 72 are emphasized in the second screen environment, S120, in order to indicate to the second user 64 an area of the process control flow that the first user 52 is studying. This may also be done through the collaboration control function identifying which objects in the second screen environment that correspond to the second and third pieces of process control equipment 22, 25 located upstream and downstream of the first piece of process control equipment 24. It may additionally be an identification of which objects in the screen where the second object 68 is displayed that correspond to the second and third pieces of process control equipment 22, 25. In the present case the fourth object 70 in the second screen 37b corresponds to the second piece of process control equipment 22 and the sixth object 72 in the second screen 37b corresponds to the third piece of process control equipment 25. The collaboration control function may then instruct the second user terminal 14 to also emphasize the fourth and/or the sixth objects 70, 72.

This may help the second user 64 in being able to determine the part of the process control system 10 on which the first user 52 is focusing. This may be important because a change of the first piece of process control equipment may influence process control equipment upstream or downstream. It may thus be important for the second user 64 to see which process control equipment that may be influenced by a change in the process control equipment corresponding to the object on which there first user 52 gazes in the first screen environment. This may also be important because the object representing these upstream and downstream equipment may not necessarily be shown adjacent the object in the second screen environment corresponding to the object in the first screen environment at which the first user gazes.

The second, fourth and sixth objects 68, 70, 72 are in this case displayed on the second screen 37b of the second screen environment and are all being emphasized, for instance through being highlighted, blinking and/or changed in size or shape.

As an option it is additionally possible that the gaze of the second user is detected.

The second gaze tracking system may detect at which area of the second screen environment that the second user 64 is gazing. Thereby the first gaze tracking device 66a may detect if the second user 64 gazes at the second screen 37b and if so at what part of this second screen 37b he or she gazes, the second gaze tracking device 66b may detect if the second user 64 gazes at the third screen 37c and if so at what part of this third screen 37c he or she gazes and the third gaze tracking device 66c may detect if the second user 64 gazes at the fourth screen 37d and if so at what part of this fourth screen 37d he or she gazes.

Based on the knowledge of where the objects are displayed in the second screen environment, it is then possible for the collaboration control function to detect the second user 64 gazing an object in the second screen environment and also what this object corresponds to in the process control system, S130. The collaboration control function may therefore receive information about the area A2 in the second screen environment at which the second user 64 gazes from the second gaze tracking system, map this area to a displayed object and determine what entity, such as a piece of process control equipment, this object corresponds to in the process control system. The second gaze tracking system thus informs the collaboration control function about which area in the second screen environment on which the second user 64 gazes and then the collaboration control function determines the object to which the area corresponds and what this object corresponds to in the first screen environment and possibly also in the process control system.

There is then an investigation of the object that the second user 64 is gazing at. There may more particularly be an investigation of if the second user gazes at the second object 68.

If the second user 64 is found to gaze at the second object 68, S140, then the method is ended, S160.

However, if the second user 64 is found to be gazing at another object than the second object, S140, it is possible that the second user 64 is directed towards this second object 68, S150. In the present case the second user 64 is found to be gazing at the seventh object 74 in the third screen 37c. The second user 64 may thereby be directed towards the second object 68. This may be done through for instance displaying an arrow at an edge of the third screen facing the second screen 37b, which arrow points towards the second object 68. At this arrow there may also be shown an object representing the first user 52. Thereafter the method may be ended, S160.

It is here possible that this directing of the second user 64 is conditional. The directing of the second user 64 towards an object corresponding to the object at which the first user 52 gazes, i.e. the first object 56, may be made in case the second object 68 and the object at which the second user gazes together fulfil a separation criterion.

The separation criterion may specify that the object 74 at which the second user gazes is in a different screen than the second screen 37b.It is additionally or instead possible that the separation criterion comprises a distance threshold that the distance between the second object 68 and the object 74 at which the second user 64 gazes should exceed.

It is thus possible that a directing is made if the second object 68 is displayed on another screen than the screen that the second user 64 gazes at and/or if the distance D between the object 74 at which the second user 64 gazes and the second object 68 is higher than a difference threshold.

Thereby if the collaboration control function detects that the second user is looking at HMI objects that are spatially too far away from where the objects in the second screen environment corresponding to the objects that the first user is paying attention to, and thus potentially losing awareness on what the first user is doing and disrupting the collaboration flow, the collaboration control function can also provide visual hints to inform or even guide the second user 64 towards the objects in the second screen environment that correspond to the objects in the first screen environment that the first user is interested in. The second user 64 may thus be provided with a visual hint making him or her aware of what the first user 52 is looking at and where this is displayed in the second screen environment. In the given example, the second collaboration assisting function or the collaboration control function detects if the second user who has access to large displays, is focusing outside the screen view of the first user, and can provide visual hints or adapt the information in the screen at which the second user is gazing.

In the example given above, the second user was directed towards the object in the second screen environment that corresponds to the object in the first screen environment on which the first user gazed. It should be realized that it is just as well possible to direct the first user towards an object in the first screen environment corresponding to the object at which the second user gazes in the second screen environment. In the present example the eighth object 62 displayed on the first screen 37a corresponds to the seventh object 74 on the third screen 37c at which the second user 64 gazes and thus represents the same entity in the process control system. The first user 52 may thus just as well be directed towards this eighth object 62 in the first screen environment instead, which may likewise be conditional.

It can thereby be seen that the directing, if the object that the second user is gazing at is different from the second object, is a directing of one of the users towards an object in the screen environment of this one user, where the object that this one user is being directed towards corresponds to the object that the other user is gazing at.

Moreover, in the case mentioned above, the object in the second screen environment corresponding to the object in the first screen environment at which the first user gazed was emphasized. It should be realized that it is additionally or instead possible that the object in the first screen environment corresponding to the object in the second screen environment at which the second user gazes is emphasized.

As can be seen above, two-way communication may be supported, which means the gaze information of a user may be leveraged to detect the HMI objects of interest in one screen environment and emphasize them in the other screen environment and vice versa. This principle can also be scaled to collaborations among more than two users and more than two screen environments. To help users/collaborators easily differentiate ownership of the gaze information, further visual enrichment such as video feeds of the corresponding collaborators might be attached to the HMI objects they are looking at.

There are a number of variations that are possible apart from those already described. The collaboration control function need not be provided centrally. It may just as well be provided as a part of the first user terminal or the second user terminal. It may also be distributed, in that parts of the collaboration control function may be performed in the first user terminal and parts in the collaboration control device. It is additionally possible that yet other parts are performed in the second user terminal. The first user terminal may additionally be mobile device such as laptop, pad or smart phone. It should also be realized that it is possible to omit the emphasizing of the fourth and sixth objects. It is also possible to omit the detecting of the gaze of the second user and directing the second user.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method of supporting collaboration between a first user (52) in a first screen environment comprising at least one first screen (37a) and a second user (64) in a second screen environment comprising at least one second screen (37b, 37c, 37d), where the first screen (37a) displays a first object (56) representing a first piece of process control equipment (24) of a process control system (10) and the second screen (37b) displays a second object (68) also representing the first piece of process control equipment (24), the method being performed by a collaboration control device (18) and comprising:
detecting (S100), using a first gaze tracking system (54) in the first screen environment, the first user (52) gazing at the first object (56), and
emphasizing (S110) the second object (68) in order to indicate to the second user (64) that the first user (52) is focusing on the first piece of process control equipment (24).

2. The method as claimed in claim 1, wherein the detecting the first user (52) gazing at the first object (56) is based on the first gaze tracking system (54) detecting the first user (52) gazing at an area (A1) in the first screen (37a) and identifying the first object (56) as an object being displayed in said area (A1).

3. The method according to claim 2, wherein the identifying of the first object (56) is based on the first piece of process control equipment (24) having a special state in the process control system (10).

4. The method as claimed in any previous claim, wherein there is a third and a fourth object (58, 70) in the first and the second screen environments, respectively, which third and fourth objects (58, 70) represent a second piece of process control equipment (22) located upstream or downstream from the first piece of process control equipment (24) in a process control flow of the process control system (10) and further comprising:
emphasizing (S120) the fourth object (70) in the second screen environment in order to indicate to the second user (64) an area of the process control flow that the first user (52) is studying.

5. The method as claimed in claim 4, wherein the second piece of process control equipment (22) is located upstream of the first piece of process control equipment (24) and further comprising a fifth and sixth object (60, 72) displayed in the first and second screen environments, respectively, the fifth and sixth objects (60, 72) representing a third piece of process control equipment (25) located downstream of the first piece of process control equipment (24) and further comprising:
emphasizing (S120) the sixth object (72) in the second screen environment in order to indicate to the second user (64) the area of the process control flow that the first user (52) is studying.

6. The method according to any previous claim, further comprising:
detecting (S130), using a second gaze tracking system (66a, 66b, 66c) in the second screen environment, the second user (64) gazing at an object in the second screen environment, and
directing (S150), if the object at which the second user is gazing (S140) is different from the second object (68), one of the users towards an object in the screen environment of this user, said object that said one user is being directed towards corresponding to the object at which said other user is gazing.

7. The method as claimed in claim 6, wherein the directing of one of the users towards an object corresponding to the object at which the other is gazing is made in case the second object (68) and the object (74) at which the second user (64) is gazing together fulfil a separation criterion.

8. The method as claimed in claim 7, wherein the separation criterion comprises a distance threshold that a distance (D) between the second object (68) and the object (74) at which the second user (64) gazes should exceed.

9. The method as claimed in claim 7 or 8, the separation criterion specifying that the object (74) at which the second user (64) gazes is in a different screen (37c) than the second screen (37b).

10. The method as claimed in any of claims 6 - 9, wherein the directing of one of the users towards an object corresponding to the object at which the other gazes comprises directing the second user (64) towards the second object (68).

11. The method according to any of claims 6 - 9, wherein the second user (64) is gazing at a seventh object (74) in the second screen environment and the directing of one of the users towards an object corresponding to the object at which the other gazes comprises directing the first user (52) towards an eighth object (62) in the first screen environment corresponding to the seventh object (74) in the second screen environment.

12. A collaboration control device (18) for supporting collaboration between a first user (52) in a first screen environment comprising at least one first screen (37a) and a second user (64) in a second screen environment comprising at least one second screen (37b, 37c, 37d), where the first screen displays a first object (56) representing a first piece of process control equipment (24) of a process control system (10) and the second screen (37b) displays a second object (68) also representing the first piece of process control equipment (24), the collaboration control device (18) comprising a processor (44) configured to:
detect, using a first gaze tracking system (54) in the first screen environment, the first user (52) gazing at the first object (56), and
emphasize the second object (68) in order to indicate to the second user (64) that the first user (52) is focusing on the first piece of process control equipment (24).

13. A computer program for supporting collaboration between a first user (52) in a first screen environment and a second user (64) in a second screen environment, said computer program comprising computer program code (48) which when executed by a processor (44) of a collaboration control device (18) according to claim 12 causes the collaboration control device (18) to perform the steps of the method as claimed in any of claims 1-11.

14. A computer program product for supporting collaboration between a first user (52) in a first screen environment and a second user (64) in a second screen environment, the computer program product comprising a data carrier (51) with the computer program with computer program code (48) according to claim 13.

15. A process control system comprising:
a first piece of process control equipment (24),
a first screen environment for a first user (52) comprising at least one first screen (37a) and a first gaze tracking system (54), where the first screen displays (37a) a first object (56) representing the first piece of process control equipment (24),
a second screen environment for a second user (64) comprising at least one second screen (37b, 37c, 37d), where the second screen (37b) displays a second object (68) also representing the first piece of process control equipment (24), and
a collaboration control device comprising a processor (44) configured to:
detect, using the first gaze tracking system (54), the first user (52) gazing at the first object (56), and
emphasize the second object (68) in order to indicate to the second user (64) that the first user (52) is focusing on the first piece of process control equipment (24).
